# EUROPEAN PATENT SPECIFICATION

(11) **EP 2 840 690 B1**
(45) Date of publication and mention of the grant of the patent: **20.12.2017**
(21) Application number: 14169980.1
(22) Date of filing: 27.05.2014
(51) Int. Cl.: H02K 9/19, H02K 5/173, B60T 13/22, F16D 55/36, H02K 7/102, H02K 7/108, F16D 13/52, F16D 23/12, F16D 121/14, F16D 121/06

(54) **Electric motor with wet type brake and wet type clutch**
Elektromotor it nasslaufende Bremse und nasslaufende Kupplung
Moteur électrique avec frein humide et embrayage humide

(30) Priority: 19.08.2013 JP 2013169609
(43) Date of publication of application: 25.02.2015
(73) Proprietor: SUMITOMO HEAVY INDUSTRIES, LTD., Tokyo 141-6025 (JP)
(72) Inventor: Ishizuka, Masayuki, Kanagawa, 237-8555 (JP); Hui, Jing, Kanagawa, 237-8555 (JP)
(74) Representative: Louis Pöhlau Lohrentz

(56) References cited:
- EP-A1- 2 626 590
- WO-A1-2012/121643
- WO-A1-2013/042490
- CN-A- 101 728 903
- GB-A- 728 501
- JP-A- 2000 228 843
- US-A1- 2002 077 209
- US-A1- 2013 154 408
- US-B1- 6 414 407

## Description

### BACKGROUND OF THE INVENTION

### Incorporation by Reference

Priority is claimed to Japanese Patent Application No. 2013-169609, filed August 19, 2013, the entire content of each of which is incorporated herein by reference.

### Field of the Invention

The present invention relates to a motor, a wet type brake, and a wet type clutch.

### Description of Related Art

US 6 414 407 B1 discloses an electrical machine comprising a rotor mounted on a shaft for rotation therewith and a stator disposed coaxially with and in opposition to the rotor. The electrical machine further comprises a housing enclosing the stator and the rotor, the housing having a first axial end and a second axial end with cooling tubes being integrated into said axial ends.

CN 101 728 903 A discloses a motor according to the preamble of the claim 1 of the present invention.

An oil-bath type motor having a configuration in which lubricant is sealed in a space which communicates with both a motor and a reduction gear and circulates in the space has been know. For example, an electric rotating machine in which a rotation shaft of a motor is hollow and a refrigerant containing oil is fed from an external cooling-fluid supply portion to a rotor accommodation space in housing through holes on the rotation shaft has been disclosed in Japanese Unexamined Patent Application Publication No. 11-41861.

In a case of a motor in which liquid coolant is sealed, when a gap between a casing and an end surface of a rotor is reduced to reduce the axial size of the motor, viscous resistance in the gap increases when the rotor rotates. Accordingly, there is a problem in that motor efficiency is deteriorated. This problem is also common to a wet type brake and a wet type clutch.

### SUMMARY OF THE INVENTION

The invention is made under consideration of such a situation. An object of the invention is to provide a method capable of reducing viscous resistance in a motor, a wet type brake, or a wet type clutch in which liquid coolant is sealed.

According to the invention, there is provided a motor according to claim 1 which includes a casing, and a rotor shaft that rotates relative to the casing, in which liquid coolant is sealed in the casing, and a concave portion is formed on a facing surface of the casing, which faces a rotor.

In this case, a width of a gap between a facing surface of the casing and an end surface of the rotor increases in a position in which the concave portion is formed, and thus it is possible to reduce viscous resistance when the rotor rotates.

The liquid coolant can flow into the concave portion and out from the concave portion, wherein a bearing supporting the rotor shaft is disposed on a radially inner side with respect to the concave portion. The concave portion and the bearing overlap each other when viewed from a radial direction. A part of the bearing is soaked into the liquid coolant in a state where the rotor shaft is parallel to a horizontal direction. The concave portion is formed to reduce the viscous resistance by the liquid coolant in the gap between the rotor and the casing when the rotor rotates. The gap between the facing surface of the casing providing the concave portion and the end surface of the rotor is equal to or less than 5 mm.

Any combination of components described above or configurations in which components or representations of the invention are substituted in terms of methods, devices, systems or the like are also within the aspects of the invention.

According to the invention, it is possible to reduce viscous resistance in a motor, a wet type brake, or a wet type clutch in which liquid coolant is sealed.

### BRIEF DESCRIPTION OF THE DRAWINGS

Fig. 1 is a cross-sectional view of apart of amotor according to an embodiment of the invention, taken along the vertical plane including a central axis.
Fig. 2 is a schematic perspective view of a rear casing.
Fig. 3 is a longitudinal cross-sectional view of one concave portion, taken along B-B line in Fig. 2.
Fig. 4 is an enlarged view of portion A in Fig. 1.
Fig. 5 is a schematic partially enlarged view of a wet type brake.

### DETAILED DESCRIPTION OF THE INVENTION

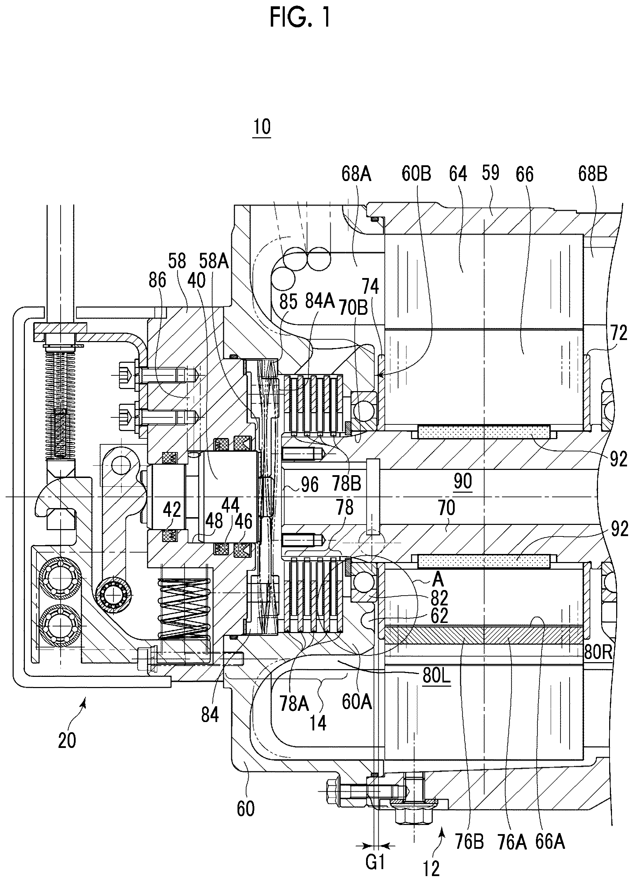

Fig. 1 is a cross-sectional view of a part of a motor 10 according to an embodiment of the invention, taken along the vertical plane including a central axis.

The motor 10 is a device in which an Interior Permanent Magnet (IPM) motor 12, a wet type multiple disc brake mechanism 14, and a parking brake device 20 are integrally provided.

The IPM motor 12 includes a stator 64 and a rotor 66, both of which are constituted by laminated steel plates. A plurality of gaps 66A are provided in the laminated steel plates which constitute the rotor 66, in which each gap extends in an axial direction. Permanent magnets 76A and 76B are embedded in the gaps. An IPM motor in which permanent magnets are embedded in a rotor is superior in efficiency, compared to an SPM motor in which permanent magnets are attached to surfaces of a rotor. The laminated steel plates which constitute the rotor 66 are integrated by a bolt (not illustrated). The laminated steel plates and a rotor shaft 70 are integrated by a key 92. The laminated steel plates may be integrated not by a bolt but by caulking or bonding. A rear side (a left side in Fig. 1) of the rotor shaft 70 is rotatably supported, via a bearing 82, by an extension portion 60A which extends from a rear casing 60 toward an inner side.

A front end side (a right side in Fig. 1) of the rotor shaft 70 is connected to an input shaft of reduction gears which has a certain configuration or are directly connected to a load, such as a vehicle wheel.

The stator 64 is fixed to a front casing 59. In a plurality of slots of the stator 64, an insulating paper is inserted between adj acent slots. A coil for generating a magnetic field is wound, across the slots, in a predetermined number of turns. Bent portions of the wound coil protrude from both ends of the stator 64 in the axial direction and form coil ends 68A and 68B.

Although not illustrated, skews which are constituted by opening portions of the slots are formed on an inner circumferential surface of the stator 64 which faces the rotor 66 to improve a voltage waveform and reduce a cogging torque. Skews may be formed not on the stator 64 but on an outer circumferential surface of the rotor 66, which faces the stator 64. Alternatively, skews may be formed on both the inner circumferential surface of the stator 64 and the outer circumferential surface of the rotor 66. In the latter case, the skew formed on the stator and the skew formed on the rotor have the same twisting direction.

End plates 72 and 74 are installed on both end surfaces of the rotor 66 in the axial direction. The end plates 72 and 74 prevent the permanent magnets 76A and 76B which are embedded in the rotor from slipping out when the rotor rotates. The end plate may be formed of stainless steel or aluminum. A material forming the end plate is not limited to aluminum. Any material may be used as a material forming the end plate as long as it is a non-magnetic material. For example, the end plate may be formed of resin.

A hollow portion 90 is formed in the rotor shaft 70 to extend in the axial direction. An end portion of the hollow portion 90 on a counter-load side (a left side) communicates, through an opening portion 96, with a space 80L which is formed in the casings 59 and 60. An input shaft of a reduction gear (not illustrated), for example, is inserted into an end portion of the hollow portion 90 on a load side (a right side).

Although not illustrated, a helical groove of which a twisting direction is opposite to the twisting direction of the skew on the inner circumferential surface of the stator or the skew on the outer circumferential surface of the rotor is formed on an inner circumferential surface of the rotor shaft 70. The helical groove functions as means for guiding liquid coolant, which flows into the hollow portion 90 through the opening portion 96, so as to flow from the space 80L on the counter-load side to a space 80R on a load side. The detail of the helical groove will be described below. The inner circumferential surface of the rotor shaft 70 may be a smooth surface on which the helical groove is not formed.

The brake mechanism 14 brakes the rotation of the rotor shaft 70 of the IPM motor 12. The brake mechanism 14 is disposed radially inside with respect to the coil end 68A of the coil wound around the stator 64. The brake mechanism 14 includes a multiple disc type braking portion 78 which has a plurality of friction plates. The friction plates of the multiple disc type braking portion 78 are constituted by a plurality (five in an example illustrated in the drawings) of fixed friction plates 7 8A and a plurality (four in an example illustrated in the drawings) of rotation friction plates 78B.

The fixed friction plates 78A are disposed between a brake piston 84, which is disposed to cover a rear end of the rear casing 60 of the IPM motor 12, and the extension portion 60A of the rear casing 60. The fixed friction plates 78A are fixed in a circumferential direction by a penetration pin (not illustrated) and are movable in the axial direction along the penetration pin.

Meanwhile, the rotation friction plates 78B are mounted on the rotor shaft 70 which rotates integrally with the rotor 66, and thus are rotatable integrally with the rotor shaft 70. A spline 70B is formed on an outer circumference of the rotor shaft 70 to extend in the axial direction. Inner circumferential ends of the rotation friction plates 78B are engaged with the spline 70B. Accordingly, the rotation friction plates 78B are integrated, in terms of the circumferential direction, with the rotor shaft 70 via the spline 70B. Furthermore, the rotation friction plates 78B are movable in the axial direction of the rotor shaft 70. A friction sheet is attached to a surface of each rotation friction plate 78B.

A first brake piston 40 is disposed to slide in a cylinder 48 which is formed in a cylinder block 58 which is mounted to a rear end of the rear casing 60. The cylinder 48 is configured such that the cylinder 48 communicates with a hydraulic mechanism through an oil passage 86 and pressurized oil is supplied, in accordance with a braking operation, from the hydraulic mechanism to an inner portion of the cylinder 48 through an oil passage. A portion between the first brake piston 40 and the cylinder 48 is sealed, by three sealing members 42, 44, and 46, with respect to the space 80L in the motor and the parking brake device 20 side.

A second brake piston 84 is disposed between a right end surface 58A of the cylinder block 58 and the multiple disc type braking portion 78 such that, when the first brake piston 40 moves, the second brake piston 84 abuts on a right end surface of the first brake piston and moves in an interlocking manner. An abutment surface 84A is formed on a right end of the second brake piston 84. The abutment surface 84A abuts on the leftmost side fixed friction plate 78A in accordance with the braking operation.

A return spring 85 is interposed between the second brake piston 84 and a shoulder portion which is formed on an inner circumference of the rear casing 60. The return spring 85 urges the second brake piston 84 to a left side.

Both the IPM motor 12 and the brake mechanism 14 are wet types. An internal space of the IPM motor 12 and an internal space of the brake mechanism 14 form one connected sealed space. The liquid coolant is sealed in this space and can flow in the space. The liquid coolant not only functions as a coolant of the rotor 66 and the stator 64 of the IPM motor but also functions as a lubricant of the bearing and a sliding portion in the motor. The liquid coolant is not limited to coolant having a lubrication function. The liquid coolant may simply function as coolant. In this embodiment, in a state where the central axis is parallel to a horizontal direction, the liquid coolant is sealed in the casings 59 and 60 by as much as the amount enabling a part of the bearing 82 of the IPM motor 12 to be soaked.

Subsequently, a braking operation by the brake mechanism 14 will be described.

On the basis of a predetermined braking control, pressurized oil is supplied from the hydraulic mechanism through the oil passage 86 to the inside of the cylinder 48. Thus, the first brake piston 40 moves to a load side (in a right direction in the drawings) in the cylinder 48. Accordingly, the second brake piston 84 also moves in the right direction, and thus the abutment surface 84A presses the leftmost side fixed friction plate 78A to the axial direction side. As a result, the plurality of fixed friction plates 78A and the plurality of rotation friction plates 78B come into contact with each other with a strong force one after another. As described above, the fixed friction plates 78A are fixed in the circumferential direction by the penetration pin and the rotation friction plates 78B are integrated, in terms of the circumferential direction, with the rotor shaft 70 via the spline 70B which is provided on the rotor shaft 70. Therefore, the fixed friction plates 78A and the rotation friction plates 78B firmly come into contact with each other via the friction sheets which are attached to the rotation friction plates 78B. As a result, the braking operation is performed on the rotor shaft 70.

When the braking control is finished, supplying of pressurized oil to the inside of the cylinder 48 is stopped. Thus, the second brake piston 84 and the first brake piston 40 return to a counter-load side (the left side in the drawings) by a restoring force of the return spring 85 which is interposed between a second brake piston 50 and the shoulder portion of the rear casing 60. As a result, the fixed friction plates 78A return to initial axial positions. In accordance with returning of the fixed friction plates 78A, the rotation friction plates 78B also return to initial axial positions. As a result, a contact state between the fixed friction plates 78A and the rotation friction plates 78B is released, and thus the braking operation is terminated.

The parking brake device 20 is mounted to a rear end of the cylinder block 58. The parking brake device 20 is configured such that, when parking a vehicle, the parking brake device 20 exerts a braking force using the multiple disc type braking portion 78 of the brake mechanism 14. Details of a configuration of the parking brake device 20 will not be described.

In this embodiment, to reduce the axial size of the motor 10, a gap between the casing and the end surface of the rotor is reduced, compared to a configuration of a motor of the related art. In other words, a gap G1 between a facing surface 60B of the extension portion 60A of the rear casing 60, which faces the rotor, and an end surface of the rotor 66, that is, a surface of the end plate 74, is considerably smaller, compared to a gap in a motor of the related art.

When the rotor 66 rotates by electromagnetic interaction between the stator and the rotor, the liquid coolant which is sealed in the casings 59 and 60 is dragged along the surface of the rotor, due to viscosity thereof. Accordingly, the liquid coolant flows in the same direction as the rotation direction of the rotor. Generally, in a case of fluid disposed between objects which move relative to each other, the shorter a distance between surfaces of the objects is, the greater the viscosity of the fluid is. When the gap G1 is extremely small, viscous resistance by the liquid coolant in the gap G1 increases, because the casing 59 and the rotor 66 relatively rotate. As a result, efficiency of the motor is deteriorated.

For this reason, in this embodiment, a concave portion 62 is provided on the facing surface 60B of the rear casing 60. The concave portion 62 is formed, and thus a distance between the facing surface 60B of the rear casing and the end surface of the rotor increases in a position in which the concave portion 62 is formed. Accordingly, it is possible to reduce the viscous resistance when the rotor rotates, compared to a case where the concave portion is not formed.

When the gap G1 between the facing surface of the casing and the end surface of the rotor is equal to or less than 5 mm, a viscous resistance reduction effect which is achieved by providing the concave portion 62 increases. When the gap G1 is equal to or less than 3 mm, the concave portion 62 is particularly effective.

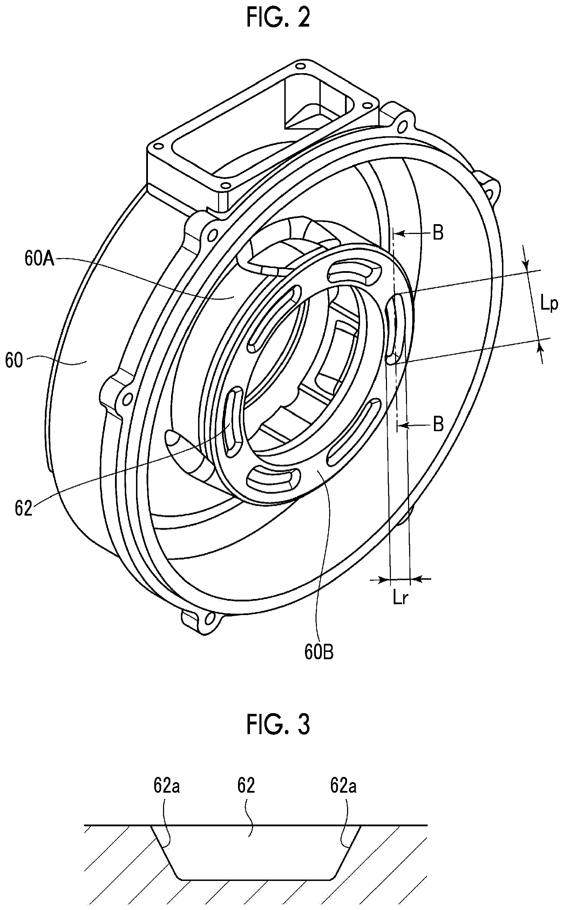

Fig. 2 is a schematic perspective view of the rear casing 60. Only one concave portion 62 maybe formed on the facing surface 60B or a plurality of concave portions 62 may be formed on the facing surface 60B. The concave portions 62 may be provided with constant intervals or may be provided with irregular intervals. A plurality of concave portions 62 may have the same shape or have a different shape. It is preferable that a circumferential length Lp of each concave portion 62 be set to be greater than a radial length Lr thereof. As a result, it is possible to widen an area in which a distance between the rear casing and the end surface of the rotor is extended.

The extension portion 60A of the rear casing 60, on which the concave portion 62 is formed, is also a portion in which the bearing 82 (see Fig. 1) supporting the rotor shaft 70 is disposed radially inward. In other words, the concave portion 62 and the bearing 82 overlap each other when viewed from the radial direction. To reduce the viscous resistance, it is preferable that a concave portion 62 occupancy area on the facing surface 60B of the rear casing 60 be widened. However, it is also necessary to ensure rigidity of the extension portion 60A for supporting the bearing. Here, when a plurality of concave portions 62 are arranged, with intervals, in a circumferential direction of the facing surface 60B, as illustrated in Fig. 2, it is possible to achieve both an increase in the concave portion 62 occupancy area and ensuring the rigidity of the extension portion 60A. One continuous annular-shaped concave portion may be formed on the facing surface 60B, instead of providing the plurality of concave portions with intervals, as long as the rigidity of the extension portion 60A is ensured.

Fig. 3 is a longitudinal cross-sectional view of one concave portion 62, taken along B-B line in Fig. 2. It is preferable that a circumferential end surface 62a of the concave portion 62 be inclined with respect to the axial direction of the motor, as illustrated in Fig. 3. When the rotor rotates, a flow flowing in the circumferential direction is generated in the vicinity of the facing surface 60B of the rear casing 60. Thus, when the circumferential end surface 62a is inclined, the liquid coolant which flows into the concave portion 62 easily flows out from the concave portion 62. Therefore, it is possible to further reduce the viscous resistance.

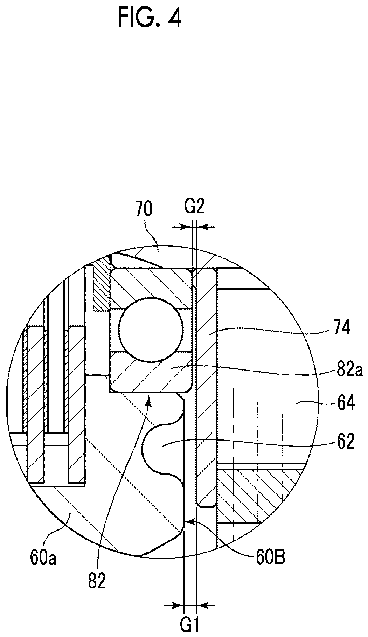

Fig. 4 is an enlarged view of portion A in Fig. 1. In this embodiment, a gap G2 between an outer ring 82a of the bearing 82 which supports the rotor shaft 70 and the end surface of the rotor in the axial direction is smaller than the gap G1 between the facing surface 60B of the rear casing 60 and the end surface of the rotor in the axial direction, as illustrated in Fig. 4. Generally, the viscous resistance increases in proportion to flow velocity, and thus, when the rotor rotates, the viscous resistance in the gap G2 which is located on an inner circumference side of the rotor is smaller than that in the gap G1 which is located on an outer circumference side of the rotor. As a result, it is considered that, even when the concave portion is not provided, there is almost no influence on a motor efficiency.

In the above description, the gap between the facing surface 60B of the rear casing 60, that is, the facing surface on a counter-load side, and the end surface of the rotor is small, and thus the concave portion 62 is formed on the facing surface. However, depending on the configuration of the motor, a gap between a facing surface of a casing, which is located on a load side, and an end surface of the rotor may be smaller than a gap between a facing surface on a counter-load side and an end surface of a rotor. In this case, when a concave portion is formed on the facing surface in which the gap relative to the end surface of the rotor is small, it is possible to further improve a viscous resistance reduction effect. Alternatively, concave portions may be formed on both the facing surface on the load side and the facing surface on the counter-load side.

In the above description, in the motor, the concave portion is formed on the rotor facing surface of the casing, which rotatably supports the rotor shaft. However, the invention can be applied to a wet type brake in which a rotation shaft is braked.

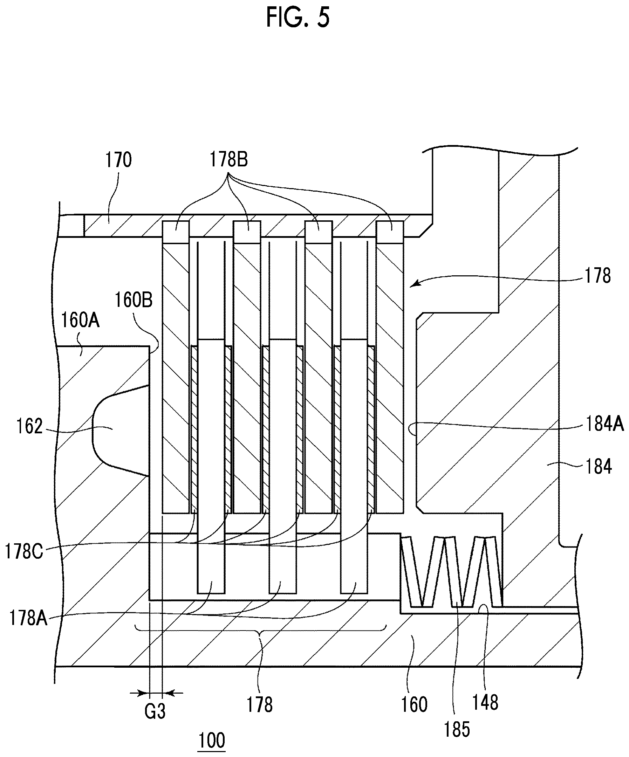

Fig. 5 is a schematic partially enlarged view of a wet type brake 100. The wet type brake 100 brakes the rotation of a rotation shaft 170. The rotation shaft 170 is rotatably supported on a casing 160. Liquid coolant is sealed in the casing 160.

The wet type brake 100 includes a multiple disc type braking portion 178 which is constituted by a plurality of friction plates. The friction plates of the multiple disc type braking portion 178 are constituted by a plurality (three in an example illustrated in Fig. 5) of fixed friction plates 178A and a plurality (four in an example illustrated in Fig. 5) of rotation friction plates 178B.

The fixed friction plates 178A are disposed between a brake piston 184 and an end surface 160B of an extension portion 160A of a casing 160. The fixed friction plates 178A are fixed in a circumferential direction by a penetration pin (not illustrated) and are movable in the axial direction along the penetration pin. A friction sheet 178C is attached to a surface of each fixed friction plate 178A.

Meanwhile, the rotation friction plates 178B are mounted on the rotation shaft 170 side, and thus are rotatable integrally with the rotation shaft 170. A spline (not illustrated) is formed on an outer circumference of the rotation shaft 170 to extend in the axial direction. Inner circumferential ends of the rotation friction plates 178B are engaged with the spline. Accordingly, the rotation friction plates 178B are integrated, in terms of the circumferential direction, with the rotation shaft 170 via the spline. Furthermore, the rotation friction plates 178B are movable in the axial direction of the rotation shaft 170.

On the basis of a predetermined braking control, pressurized oil is supplied from a hydraulic mechanism (not illustrated) through an oil passage to the inside of a cylinder 148. Thus, a brake piston 184 moves to a left side in Fig. 5. Accordingly, an abutment surface 184Apresses the rightmost side fixed friction plate 178A to the axial direction side. As a result, the plurality of fixed friction plates 178A and the plurality of rotation friction plates 178B come into contact with each other with a strong force one after another. As a result, the braking operation is performed on the rotation shaft 170. When the braking control is finished, supplying of pressurized oil to the inside of the cylinder 148 is stopped. Thus, the brake piston 184 returns to a right side in Fig. 5 by a restoring force of a return spring 185. As a result, the fixed friction plates 178A return to initial axial positions. In accordance with returning of the fixed friction plates 178A, the rotation friction plates 178B also return to initial axial positions. As a result, a contact state between the fixed friction plates 178A and the rotation friction plates 178B is released, and thus the braking operation is terminated.

In the wet type brake 100 described above, when the rotation shaft 170 rotates during a non-braking operation, the liquid coolant which is sealed in the casing 160 is dragged along a surface of the rotation friction plate 178B which rotates along with the rotation shaft 170, due to viscosity thereof. Accordingly, the liquid coolant flows in the same direction as the rotation direction of the rotation friction plate. In this case, when a gap G3 between the facing surface 160B of the casing 160, which faces the rotation friction plate, and a surface of the leftmost side rotation friction plate 178B is small (because the facing surface 160B and the rotation friction plate 178B relatively rotate), viscous resistance of the liquid coolant in the gap G3 increases. As a result, rotation efficiency is deteriorated in the non-braking operation.

For this reason, similarly to the embodiment illustrated in Fig. 1, a concave portion 162 is provided on the facing surface 160B of the extension portion 160A of the casing 160. The concave portion 162 is formed, and thus a width of a gap between the facing surface 160B of the casing and the leftmost side rotation friction plate 178B increases in a position in which the concave portion 162 is formed. Accordingly, it is possible to reduce the viscous resistance when the rotation shaft rotates, compared to a case where the concave portion is not formed. Similarly to the embodiment described above, the number and the shape of the concave portions can be variously selected.

The invention can be applied to a wet type clutch having a configuration in which power is transmitted by causing the friction plates which are connected to an input shaft and an output shaft to come into contact with each other. The wet type brake which is described above with reference to Fig. 5 and the wet type clutch have a functional difference in that the wet type brake brakes the shaft by causing the friction plates to come into contact with each other and the wet type clutch connects the input shaft and the output shaft by causing the friction plates to come into contact with each other. However, the multiple friction plate configuration itself is the same, and thus details of the wet type clutch will not be described.

Hereinbefore, the embodiments of the invention are described. However, these embodiments are exemplary. Also, it should be understood by those skilled in the art that components of the embodiments can be combined in various ways and these modified examples are also within the scope of the invention.

In the embodiment described above, the brake mechanism is mounted on the counter-load side of the IPM motor. However, the invention can be applied to a configuration in which the brake mechanism is mounted on the load side of the IPM motor.

In the above-described embodiment illustrated in Fig. 1, the internal space of the IPM motor and the internal space of the brake mechanism form one connected sealed space and the liquid coolant is sealed in this space. However, the invention can be applied to a configuration in which the liquid coolant is sealed in only the internal space of the motor. Furthermore, a type of the motor is not limited to the IPM motor and the invention can be applied to a Surface Permanent Magnet (SPM) motor or an induction motor.

## Claims

1. A motor (12) comprising:
a casing (60);
a rotor (66);
a rotor shaft (70) which rotates relative to the casing (60) and which rotates integrally with the rotor (66);
wherein liquid coolant is sealed in the casing (60),
wherein a concave portion (62) is formed on a facing surface (60B) of the casing (60), which faces the rotor (66), and wherein the liquid coolant can flow into the concave portion (62) and out from the concave portion (62),
wherein a bearing (82) supporting the rotor shaft (70) is disposed on a radially inner side with respect to the concave portion (62), and the concave portion (62) and the bearing (82) overlap each other when viewed from a radial direction,
wherein a part of the bearing (82) is soaked into the liquid coolant in a state where the rotor shaft (70) is parallel to a horizontal direction, **characterised in that** the concave portion (62) is formed to reduce the viscous resistance by the liquid coolant in the gap (G1) between the rotor (66) and the casing (60) when the rotor (66) rotates, and
wherein the gap (G1) between the facing surface (60B) of the casing (60) providing the concave portion (62) and the end surface of the rotor is equal to or less than 5 mm.

2. The motor (12) according to Claim 1,
wherein a plurality of the concave portions (62) are arranged, with intervals, in a circumferential direction of the facing surface (60B).

3. The motor (12) according to Claim 2,
wherein a circumferential length (Lₚ) of the concave portion (62) is set to be greater than a radial length (Lᵣ) thereof.

4. The motor (12) according to Claim 2 or 3,
wherein a circumferential end surface (62a) of the concave portion (62) is inclined with respect to an axial direction.

5. The motor (12) according to any one of Claims 1 to 4,
wherein, in a facing surface of the casing (60), which is located on a counter-load side, and a facing surface of the casing (60), which is located on a load side, the concave portion (62) is formed on one facing surface in which a distance relative to the rotor (66) is smaller than a distance between the other facing surface and the rotor (66).

6. The motor (12) according to any one of Claims 1 to 5,
wherein an axial gap (G2) between an outer ring of the bearing (82) which supports the rotor shaft (70) and the rotor (66) is smaller than an axial gap (G1) between the casing (60) and the rotor (66).

## Patentansprüche

1. Ein Motor (12), umfassend:
ein Gehäuse (60),
einen Rotor (66),
eine Rotorwelle (70), die relativ zu dem Gehäuse (60) rotiert und sich einteilig mit dem Rotor (66) dreht,
wobei in dem Gehäuse (60) flüssiges Kühlmittel abgedichtet eingeschlossen ist,
wobei auf einer zugewandten Oberfläche (60B) des Gehäuses (60) ein dem Rotor (66) zugewandter konkaver Abschnitt (62) ausgebildet ist und wobei das flüssige Kühlmittel in den konkaven Abschnitt (62) hineinströmen und aus dem konkaven Abschnitt (62) herausströmen kann,
wobei ein die Rotorwelle (70) stützendes Lager (82) auf einer in Bezug auf den konkaven Abschnitt (62) radial inneren Seite angeordnet ist und sich der konkave Abschnitt (62) und das Lager (82) überlappen, wenn man sie in radialer Richtung betrachtet,
worin in einem Zustand, in dem sich die Rotorwelle (70) parallel zu einer horizontalen Richtung befindet, ein Teil des Lagers (82) in das flüssige Kühlmittel eingetaucht ist,
**dadurch gekennzeichnet, dass** der konkave Abschnitt (62) so ausgebildet ist, dass er den viskosen Widerstand durch das flüssige Kühlmittel in dem Spalt (G1) zwischen dem Rotor (66) und dem Gehäuse (60) reduziert, wenn der Rotor (66) rotiert, und
worin der Spalt (G1) zwischen der zugewandten Oberfläche (60B) des Gehäuses (60), die den konkaven Abschnitt (62) bereitstellt, und der Endfläche des Rotors gleich oder kleiner 5mm misst.

2. Der Motor (12) nach Anspruch 1, wobei eine Mehrzahl der konkaven Abschnitte (62), mit Abständen zueinander, in einer Umfangsrichtung der zugewandten Oberfläche (60B) angeordnet sind.

3. Der Motor (12) nach Anspruch 2, wobei eine Umfangslänge (Lₚ) des konkaven Abschnitts (62) so festgelegt ist, dass sie größer ist als dessen radiale Länge (Lᵣ).

4. Der Motor (12) nach Anspruch 2 oder 3, wobei eine in Umfangsrichtung verlaufende Endfläche (62a) des konkaven Abschnitts (62) in Bezug auf eine axiale Richtung geneigt ist.

5. Der Motor nach einem der Ansprüche 1 bis 4, wobei bei einer zugewandten Oberfläche des Gehäuses (60), die auf einer Lastgegenseite liegt, und bei einer zugewandten Oberfläche des Gehäuses (60), die auf einer Lastseite liegt, der konkave Abschnitt (62) auf der einen zugewandten Oberfläche ausgebildet ist, bei der eine Entfernung relativ zum Rotor (66) kleiner ist als eine Entfernung zwischen der anderen zugewandten Oberfläche und dem Rotor (66).

6. Der Motor (12) nach einem der Ansprüche 1 bis 6, wobei ein axialer Spalt (G2) zwischen einem Außenring des Lagers (82), das die Rotorwelle (70) stützt, und dem Rotor (66) kleiner ist als ein axialer Spalt (G1) zwischen dem Gehäuse (60) und dem Rotor (66).

## Revendications

1. Moteur (12) comprenant :
un boîtier (60) ;
un rotor (66) ;
un arbre de rotor (70) qui tourne par rapport au boîtier (60) et qui tourne de manière solidaire avec le rotor (66) ;
dans lequel le réfrigérant liquide est scellé dans le boîtier (60),
dans lequel une partie concave (62) est formée sur une surface en vis-à-vis (60B) du boîtier (60), qui fait face au rotor (66) et dans lequel le réfrigérant liquide peut s'écouler dans la partie concave (62) et sortir de la partie concave (62),
dans lequel un palier (82) supportant l'arbre de rotor (70) est disposé sur un côté radialement interne par rapport à la partie concave (62), et la partie concave (62) et le palier (82) se chevauchent lorsqu'ils sont observés à partir d'une direction radiale, dans lequel une partie du palier (82) est trempée dans le réfrigérant liquide dans un état dans lequel l'arbre de rotor (70) est parallèle à une direction horizontale,
**caractérisé en ce que** :
la partie concave (62) est formée pour réduire la résistance visqueuse par le réfrigérant liquide dans l'espace (G1) entre le rotor (66) et le boîtier (60) lorsque le rotor (66) tourne, et
dans lequel l'espace (G1) entre la surface en vis-à-vis (60B) du boîtier (60) fournissant la partie concave (62) et la surface d'extrémité du rotor est égal ou inférieur à 5 mm.

2. Moteur (12) selon la revendication 1,
dans lequel une pluralité de parties concaves (62) sont agencées, avec des intervalles, dans une direction circonférentielle de la surface en vis-à-vis (60B).

3. Moteur (12) selon la revendication 2,
dans lequel une longueur circonférentielle (Lₚ) de la partie concave (62) est déterminée pour être supérieure à sa longueur radiale (Lᵣ).

4. Moteur (12) selon la revendication 2 ou 3,
dans lequel une surface d'extrémité circonférentielle (62a) de la partie concave (62) est inclinée par rapport à une direction axiale.

5. Moteur (12) selon l'une quelconque des revendications 1 à 4,
dans lequel, dans une surface en vis-à-vis du boîtier (60), qui est positionnée sur un côté de charge antagoniste, et une surface en vis-à-vis du boîtier (60), qui est positionnée sur un côté de charge, la partie concave (62) est formée sur une surface en vis-à-vis dans laquelle une distance par rapport au rotor (66) est inférieure à une distance entre l'autre surface en vis-à-vis et le rotor (66).

6. Moteur (12) selon l'une quelconque des revendications 1 à 5,
dans lequel un espace axial (G2) entre une bague externe du palier (82) qui supporte l'arbre de rotor (70) et le rotor (66) est inférieur à un espace axial (G1) entre le boîtier (60) et le rotor (66).
